(19) **Europäisches Patentamt**
**European Patent Office**
**Office européen des brevets**

(11) **EP 4 155 923 A1**

(12) **EUROPEAN PATENT APPLICATION**
published in accordance with Art. 153(4) EPC

(43) Date of publication:
**29.03.2023 Bulletin 2023/13**

(21) Application number: **21808022.4**

(22) Date of filing: **10.05.2021**

(51) International Patent Classification (IPC):
***G06F 9/455*** *(2006.01)*

(52) Cooperative Patent Classification (CPC):
**G06F 9/455; H04L 12/46**

(86) International application number:
**PCT/CN2021/092652**

(87) International publication number:
**WO 2021/233152 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2020 CN 202010434160**

(71) Applicant: **ZTE Corporation**
**Shenzhen, Guangdong 518057 (CN)**

(72) Inventor: **YANG, Song**
**Shenzhen, Guangdong 518057 (CN)**

(74) Representative: **Tiburzi, Andrea et al**
**Barzanò & Zanardo Roma S.p.A.**
**Via Piemonte 26**
**00187 Roma (IT)**

(54) **VIRTUALIZED NETWORK FUNCTION DEPLOYMENT METHOD, MANAGEMENT AND ORCHESTRATION PLATFORM, AND MEDIUM**

(57)     Provided is a virtualized network function deployment method, a management and orchestration platform, and a computer-readable medium. The method includes acquiring (S1) current deployment resource information of a deployment platform and determining a host to be deployed; according to virtual machine information of a virtualized network function and central processing unit information of the host to be deployed, performing (S2) primary pre-deployment on a virtual machine required by the VNF; and according to memory information of each host in the deployment platform, performing (S3) secondary pre-deployment on a virtual machine occupying overrun memory in a primary pre-deployment result.

```
┌─────────────────────────────────────────────────────────────┐
│ Acquire current deployment resource information of a         │  S1
│ deployment platform and determine a host to be deployed      │
└─────────────────────────────────────────────────────────────┘
                              │
                              ▼
┌─────────────────────────────────────────────────────────────┐
│ According to virtual machine information of a virtualized    │  S2
│ network function and central processing unit information of  │
│ the host to be deployed, perform primary pre-deployment on   │
│ a virtual machine required by the virtualized network        │
│ function                                                     │
└─────────────────────────────────────────────────────────────┘
                              │
                              ▼
┌─────────────────────────────────────────────────────────────┐
│ According to memory information of each host in the          │  S3
│ deployment platform, perform secondary pre-deployment on a   │
│ virtual machine occupying overrun memory in a primary        │
│ pre-deployment result                                        │
└─────────────────────────────────────────────────────────────┘
```

**FIG. 1**

EP 4 155 923 A1

## Description

This application claims priority to Chinese Patent Application No. 202010434160.2 filed with the China National Intellectual Property Administration (CNIPA) on May 21, 2020, the disclosure of which is incorporated herein by reference in its entirety.

## TECHNICAL FIELD

The present disclosure relates to the field of communications technologies, for example, a virtualized network function deployment method, a management and orchestration platform, and a computer-readable medium.

## BACKGROUND

In the field of virtualization, a resource of the virtualized network function (VNF) is often randomly deployed on a corresponding deployment platform without planning a specific deployment location. This randomness may result in a large fragmentation rate for the deployment platform, thereby wasting physical resources. For example, a processing method of the open source cloud computing management platform Openstack is mostly creating virtual machines in series. That is, for each virtual machine, multiple host nodes of the platform are circularly deployed, a host satisfying a deployment requirement of the virtual machine is searched, and once the host is found, the host is directly deployed regardless of the resource fragmentation rate.

To improve a resource utilization rate, a common scheme is to perform centralized deployment of virtual resources by using an exhaustive method, that is, performing permutations and combinations on virtual machines that need to participate in the centralized deployment this time, trying to perform serial deployment in each permutation and combination scenario, comparing deployment results in multiple combination scenarios, and using a deployment result with the minimum fragmentation rate of cloud platform resources as a final location information result.

However, the preceding centralized deployment process is often time-consuming, labor-intensive, and very inefficient in practical applications. Moreover, with an increase of the number of virtual machines participating in the centralized deployment, the permutation and combination scenarios show explosive growth, resulting in relatively weak engineering applicability.

## SUMMARY

The present disclosure provides a virtualized network function deployment method, a management and orchestration platform, and a computer-readable medium.

In a first aspect, the present disclosure provides a virtualized network function deployment method. The method includes the following.

Current deployment resource information of a deployment platform is acquired and a host to be deployed is determined, where the deployment resource information includes central processing unit information and memory information of each host in the deployment platform.

According to virtual machine information of a virtualized network function and central processing unit information of the host to be deployed, primary pre-deployment is performed on a virtual machine required by the virtualized network function.

According to memory information of each host in the deployment platform, secondary pre-deployment is performed on a virtual machine occupying overrun memory in a primary pre-deployment result.

In a second aspect, the present disclosure further provides a management and orchestration platform that includes at least one processor and a storage apparatus configured to store at least one program.

The at least one program, when executed by the at least one processor, causes the at least one processor to perform the virtualized network function deployment method described in the first aspect.

In a third aspect, the present disclosure further provides a computer-readable medium, which is configured to store a computer program which, when executed by a processor, causes the processor to perform the virtualized network function deployment method described in the first aspect.

## BRIEF DESCRIPTION OF DRAWINGS

FIG. 1 is a flowchart of a virtualized network function deployment method according to an embodiment of the present disclosure;

FIG. 2 is a flowchart of another virtualized network function deployment method according to an embodiment of the present disclosure;

FIG. 3 is a flowchart of an implementation of S1 according to an embodiment of the present disclosure;

FIG. 4 is a flowchart of an implementation of S3 according to an embodiment of the present disclosure;

FIG. 5 is a flowchart of an implementation of S301 according to an embodiment of the present disclosure; and

FIG. 6 is a flowchart of another virtualized network function deployment method according to an embodiment of the present disclosure.

DETAILED DESCRIPTION

A virtualized network function deployment method, a management and orchestration platform, and a computer-readable medium provided in the present disclosure are described in detail below in conjunction with drawings.

Example embodiments are described more completely hereinafter with reference to the drawings, but the example embodiments may be embodied in different forms and are not to be construed as limited to the embodiments set forth herein. Rather, these embodiments are provided to make the present disclosure thorough and complete and make those skilled in the art fully understand the scope of the present disclosure.

Terms used herein are used for describing particular embodiments and are not intended to limit the present disclosure. As used herein, singular forms "one" and "the" are intended to include a plural form, unless otherwise clearly specified in the context. Further, it is to be understood that the terms "include" and/or "made of" used in the specification specify the existence of the feature, entity, step, operation, element, and/or component, without excluding the existence or addition of at least one other feature, entity, step, operation, element, component, and/or combination thereof.

Unless otherwise defined, all the terms (including technical and scientific terms) used herein have the same meanings as commonly understood by those of ordinary skill in the art. Further, it is to be understood that terms, such as those defined in commonly used dictionaries, are to be interpreted as having meanings consistent with their meanings in the context of the related art and the present disclosure and are not to be interpreted in an idealized or overly formal sense unless expressly so defined herein.

The virtualized network function deployment method provided in the present disclosure may be used for acquiring current deployment resource information of a deployment platform, determining a host to be deployed, according to virtual machine information of a virtualized network function and central processing unit information of the host to be deployed, performing the first pre-deployment (that is, primary pre-deployment) on a virtual machine required by the virtualized network function, performing secondary pre-deployment on a virtual machine occupying overrun memory after the primary pre-deployment, and then generating a deployment result of each virtual machine.

The virtualized network function deployment method is suitable for an application scenario in which the virtualized network function is deployed on a virtualized platform, and may be applied to a management and orchestration platform side responsible for application resource management during the first centralized deployment, that is, at the opening stage, so as to reduce the resource fragmentation rate of the deployment platform. The virtualized platform includes a cloud infrastructure platform, a network function virtualization (NFV) infrastructure (NFVI) platform, and the like.

In some embodiments, the formula

$$F = \sum_{i=1}^{N} C_i / \sum_{j=1}^{M} C_j' \times 100\%$$

is used for determining the resource fragmentation rate, where F denotes the resource fragmentation rate of the deployment platform, $C_i$ denotes a requirement for the number of central processing units of an $i^{th}$ virtual machine, N denotes the total number of virtual machines required by the network function virtualization, i ∈ [1, N], $C_j'$ denotes the number of central processing units of a $j^{th}$ host, M denotes the total number of hosts corresponding to the virtual machines, and j ∈ [1, M]. Then, according to the definition of the resource fragmentation rate of the deployment platform, the primary pre-deployment and secondary pre-deployment strategies may be designed and adjusted subsequently.

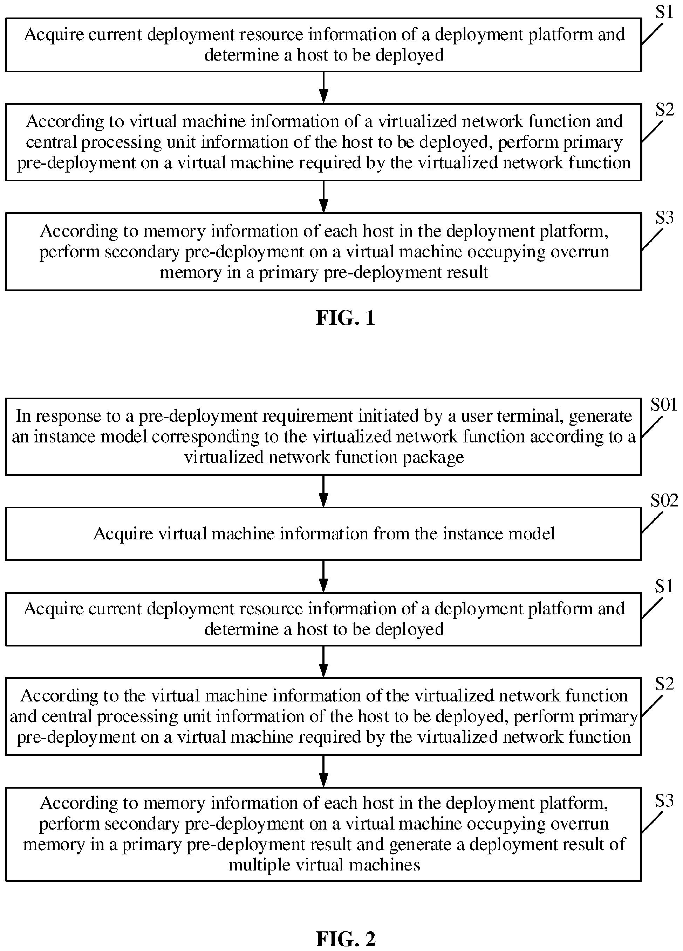

FIG. 1 is a flowchart of a virtualized network function deployment method according to an embodiment of the present disclosure. As shown in FIG. 1, the method includes the following.

In S1, current deployment resource information of a deployment platform is acquired, and a host to be deployed is determined.

The deployment resource information includes central processing unit information and memory information of each host in the deployment platform. For example, the central processing unit information may include the number of central processing units corresponding to the host, and the memory information may include the memory capacity and the memory margin of the corresponding host. The deployment resource information may further include a corresponding host identifier and deployment permission information. In some embodiments, the host to be deployed may be determined according to the deployment permission information.

In S1, according to the actual deployment situation, the host to be deployed may be determined by means of random selection, sequential selection, a query list, and the like.

In some embodiments, a corresponding deployment platform interface may be called by a network function virtualization orchestrator (NFVO) on the management and orchestration platform side, so as to query the current deployment resource and perform the subsequent pre-deployment.

In some embodiments, when the current deployment resource of the deployment platform does not satisfy a deployment requirement of the network function virtualization and the host to be deployed cannot be determined, the flow ends and an error response is returned to a user terminal.

In S2, according to virtual machine information of a virtualized network function and central processing unit information of the host to be deployed, primary pre-deployment is performed on a virtual machine required by the virtualized network function.

In S2, the virtual machine information is used for describing requirements of multiple virtual machines required by the virtualized network function, and a process of performing the primary pre-deployment according to the virtual machine information and the central processing unit information is a process of selecting hosts to be deployed satisfying requirements for the central processing units of the multiple virtual machines to perform the pre-deployment. The primary pre-deployment is a process of deployment calculation and verification before the actual deployment. A generated primary pre-deployment result describes a correspondence between virtual machines generated after the pre-deployment and hosts pre-deployed by the pre-deployment and may be embodied by means of identifier associations, a list, and the like.

In S3, according to memory information of each host in the deployment platform, secondary pre-deployment is performed on a virtual machine occupying overrun memory in a primary pre-deployment result.

In S3, a process of performing the secondary pre-deployment on the virtual machine occupying the overrun memory in the primary pre-deployment result according to the memory information is a process of adjusting a deployment location of the virtual machine occupying the overrun memory of the host after the primary pre-deployment according to the memory information. The generated deployment result of multiple virtual machines is a deployment result of all virtual machines required by the virtualized network function after the two pre-deployments.

The embodiment of the present disclosure provides the virtualized network function deployment method. The method includes acquiring current deployment resource information of a deployment platform, determining a host to be deployed, according to virtual machine information of a virtualized network function and central processing unit information, performing primary pre-deployment on a virtual machine required by the virtualized network function, performing secondary pre-deployment on a virtual machine occupying overrun memory after the primary pre-deployment, and generating a deployment result of multiple virtual machines. The method may be used for increasing interaction with the deployment platform, performing pre-deployment separately according to the central processing unit information and the memory information, outputting the deployment result, and performing verification and deployment according to the obtained deployment result, thereby improving the efficiency and effectiveness of the actual deployment and reducing a redundant process in the centralized deployment.

FIG. 2 is a flowchart of another virtualized network function deployment method according to an embodiment of the present disclosure. As shown in FIG. 2, the method is an alternative embodiment based on the method shown in FIG. 1. For example, S01 and S02 are further included before S1.

In S01, in response to a pre-deployment requirement initiated by a user terminal, an instance model corresponding to the virtualized network function is generated according to a virtualized network function package.

In some embodiments, the user terminal uploads all virtualized network function packages required for opening to the management and orchestration platform. The network function virtualization orchestrator stores these virtualized network function packages. When the user terminal initiates the pre-deployment requirement, multiple virtualized network function packages are sent to a virtualized network function manager (VNFM) on the management and orchestration platform side, or the virtualized network function manager actively acquires the virtualized network function packages and instantiates and integrates the multiple virtualized network function packages to generate a corresponding instance model.

In S02, virtual machine information is acquired from the instance model. A resource model includes the virtual machine information. For example, the resource model is used for describing requirements of multiple virtualized network functions for cloud resources.

In some embodiments, in S02, acquiring the virtual machine information from the instance model includes the following.

A resource requirement of the virtualized network function is extracted from the instance model, the resource requirement is segmented in units of virtual machines, and the virtual machine information is generated.

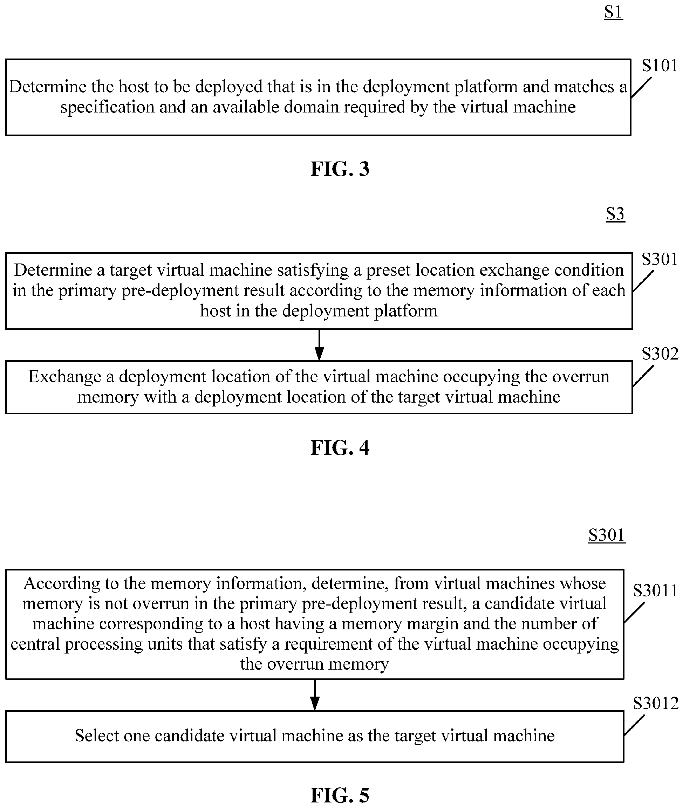

FIG. 3 is a flowchart of an implementation of S1 according to an embodiment of the present disclosure. For example, the deployment resource information further includes specification information and available domain information of each host in the deployment platform. As shown in FIG. 3, determining the host to be deployed in S1 includes S101.

In S101, the host to be deployed that is in the deployment platform and matches a specification and an available domain required by the virtual machine is determined.

The host to be deployed is determined according to the virtual machine information, the specification information and the available domain information, and both the subsequent primary pre-deployment and secondary pre-deployment are performed on multiple hosts to be deployed.

The embodiment of the present disclosure provides the virtualized network function deployment method. The method may be used for first satisfying the requirement of the virtual machine for the specification and the available domain and removing a host that cannot be deployed on a deployment environment, thereby increasing centralized deployment efficiency.

FIG. 4 is a flowchart of an implementation of S3 according to an embodiment of the present disclosure. As shown in FIG. 4, in S3, according to the memory information of each host in the deployment platform, performing the secondary pre-deployment on the virtual machine occupying the overrun memory in the primary pre-deployment result includes S301 and S302.

In S301, a target virtual machine satisfying a preset location exchange condition in the primary pre-deployment result is determined according to the memory information of each host in the deployment platform.

In S301, a process of determining the target virtual machine satisfying the preset location exchange condition in the primary pre-deployment result according to the memory information is a process of determining the target virtual machine corresponding to a host whose memory condition satisfies a corresponding memory requirement in the primary pre-deployment result. Based on the principle of as adding no new host as possible, an attempt is first made to adjust the deployment location of the virtual machine occupying the overrun memory among multiple hosts in the primary pre-deployment result.

In some embodiments, when it is determined that the target virtual machine does not exist in the primary pre-deployment result, a target host outside the primary pre-deployment result is determined according to the memory information and the central processing unit information, and the virtual machine occupying the overrun memory is pre-deployed on the target host.

FIG. 5 is a flowchart of an implementation of S301 according to an embodiment of the present disclosure. As shown in FIG. 5, determining the target virtual machine satisfying the preset location exchange condition in the primary pre-deployment result according to the memory information in S301 includes S3011 and S3012.

In S3011, according to the memory information, from virtual machines without overrun memory in the primary pre-deployment result, a candidate virtual machine corresponding to a host having a memory margin and the number of central processing units that satisfy a requirement of the virtual machine occupying the overrun memory is determined.

In S3011, after a location of the virtual machine without overrun memory in the primary pre-deployment result is exchanged with a location of the virtual machine having the overrun memory, on the premise that the number of central processing units corresponding to each side of the exchange is not overrun, the candidate virtual machine whose memory is not overrun for the host is determined. For example, the determination may be performed in the manner of looping and traversing through virtual machines without overrun memory in the primary pre-deployment result.

In some embodiments, after it is verified that the requirement of a virtual machine for the specification and the available domain does not conflict with the requirement of the virtual machine occupying the overrun memory for the specification and the available domain, the virtual machine is determined to be the candidate virtual machine.

In some embodiments, when it is detected that a ratio of virtual machines occupying the overrun memory to all virtual machines is greater than a preset overrun ratio threshold value, weighing factors should be reconsidered. For example, in the case where the preceding case occurs, it is returned to S2, and when the primary pre-deployment is re-performed, pre-deployment is performed according to other resource information except the central processing unit information.

In S3012, one candidate virtual machine is selected as the target virtual machine.

In S3012, one candidate virtual machine is selected as the target virtual machine according to a principle of the smallest cloud resource fragmentation rate.

In S302, a deployment location of the virtual machine occupying the overrun memory is exchanged with a deployment location of the target virtual machine.

The embodiment of the present disclosure provides the virtualized network function deployment method. The method may be used for performing the secondary pre-deployment on the premise of as adding no new host node as possible, thereby ensuring the resource fragmentation rate of the deployment platform and achieving effective deployment.

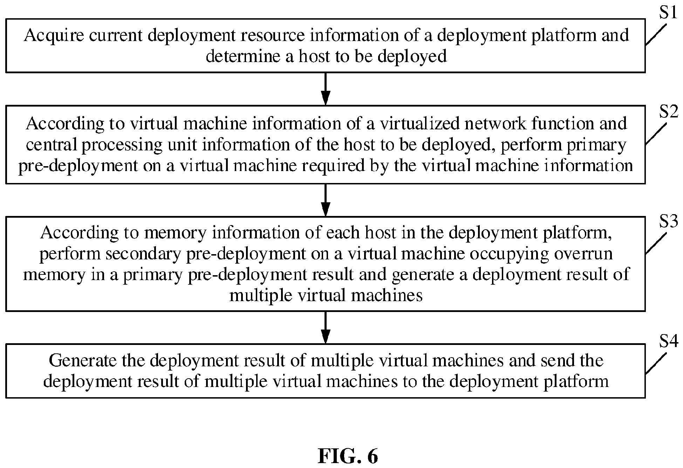

FIG. 6 is a flowchart of another virtualized network function deployment method according to an embodiment of the present disclosure. As shown in FIG. 6, the method is an alternative embodiment based on the method shown in FIG. 1. For example, the method further includes the following.

In S4, a deployment result of multiple virtual machines is generated, and the deployment result of the multiple virtual machines is sent to the deployment platform.

In S4, the deployment result of the multiple virtual machines obtained by calculation of the pre-deployment is sent to the deployment platform for the deployment platform to verify the deployment result. After the verification is passed, the deployment platform directly deploys the virtual machines according to the deployment result or waits for a corresponding user event to trigger the actual deployment.

In some embodiments, the deployment resource information is updated in response to deployment error information sent by the deployment platform, and the primary pre-deployment and the secondary pre-deployment are performed again according to the updated deployment resource information.

When the deployment resource of the deployment platform changes compared with the previously acquired deployment resource, resulting in a conflict between the deployment result and the actual deployment situation, the deployment resource information may be re-acquired, and the primary pre-deployment and the secondary pre-deployment may be performed.

The embodiment of the present disclosure provides the virtualized network function deployment method. The method may be used for sending the deployment result to the deployment platform for verification, thereby ensuring the validity of the deployment.

The virtualized network function deployment method provided in the present disclosure is described in detail below in conjunction with practical applications. For example, the user terminal side, the management and orchestration platform side, and the deployment platform side are involved, and the management and orchestration platform side includes the network function virtualization orchestrator and the virtualized network function manager.

First, the user terminal uploads all virtualized network function packages required for opening to the management and orchestration platform. The network function virtualization orchestrator stores the virtualized network function packages. When the user terminal initiates the pre-deployment requirement, the virtualized network function manager downloads the virtualized network function packages, instantiates and integrates multiple virtualized network function packages to generate a corresponding instance model, and returns the instance model to the network function virtualization orchestrator.

Then, the network function virtualization orchestrator extracts the resource requirement of the virtualized network function from the instance model, segments the resource requirement in units of virtual machines to generate the resource model including the virtual machine information, and acquires the current deployment resource information of the deployment platform. The deployment resource information includes the specification information, the available domain information, the memory information, and the central processing unit information of each host in the deployment platform. The host to be deployed matching the virtual machine is determined according to the specification information and the available domain information. The primary pre-deployment is performed on the virtual machine according to the virtual machine information of the virtualized network function and the central processing unit information of the host to be deployed.

The network function virtualization orchestrator performs the secondary pre-deployment on the virtual machine occupying the overrun memory in the pre-deployment result according to the memory information of each host in the deployment platform in the manner of the following: determining, from virtual machines whose memory is not overrun in the primary pre-deployment result, a candidate virtual machine corresponding to a host having the memory margin and the number of central processing units that satisfy the requirement of the virtual machine occupying the overrun memory, selecting one candidate virtual machine as the target virtual machine, and exchanging the deployment location of the virtual machine occupying the overrun memory with the deployment location of the target virtual machine. When it is determined that the target virtual machine does not exist in the primary pre-deployment result, the target host outside the primary pre-deployment result is determined according to the memory information and the central processing unit information of each host in the deployment platform, the virtual machine occupying the overrun memory is pre-deployed on the target host, and the deployment result of multiple virtual machines is generated.

Finally, the deployment result of the multiple virtual machines is sent to the deployment platform for the deployment platform to verify the deployment result. After the verification is passed, the deployment platform directly deploys the virtual machines according to the deployment result or waits for a corresponding user event to trigger the actual deployment. If the verification fails, the deployment platform sends deployment error information to the network function virtualization orchestrator, and the network function virtualization orchestrator reacquires the deployment resource information and reperforms the primary pre-deployment and the secondary pre-deployment.

An embodiment of the present disclosure provides a management and orchestration platform that includes at least one processor and a storage apparatus configured to store at least one program.

The at least one program, when executed by the at least one processor, causes the at least one processor to perform any virtualized network function deployment method in the preceding embodiments.

An embodiment of the present disclosure provides a computer-readable medium, which is configured to store a computer program which, when executed by a processor, causes the processor to perform any virtualized network function deployment method in the preceding embodiments.

Embodiments of the present disclosure provide a virtualized network function deployment method, a management and orchestration platform, and a computer-readable medium so that the deployment resource of the deployment platform may be acquired through interaction with the deployment platform, and the pre-deployment of virtual machines is performed according to a corresponding pre-deployment rule, thereby ensuring the resource fragmentation rate of the deployment platform, at the same time, the efficiency and effectiveness of the centralized deployment are increased, the applicability of the centralized deployment is improved, and the resource utilization rate is increased.

It is to be understood by those of ordinary skill in the art that some or all steps of the preceding method and function modules/units in the preceding apparatus may be implemented as software, firmware, hardware and suitable combinations thereof. In the hardware implementation, the division of the preceding function modules/units may not correspond to the division of physical components. For example, one physical component may have multiple functions, or one function or step may be performed jointly by several physical components. Some or all physical components may be implemented as software executed by a processor, such as a central processing unit, a digital signal processor or a microprocessor, may be implemented as hardware, or may be implemented as integrated circuits, such as application-specific integrated circuits. Such software may be distributed on computer-readable media, which may include computer storage media (or non-transitory media) and communication media (or transitory media). As is known to those of ordinary skill in the art, the term computer storage media include volatile and nonvolatile media and removable and non-removable media implemented in any method or technology for storing information (such as computer-readable instructions, data structures, program modules or other data). The computer storage media include, but are not limited to, a random access memory (RAM), a read-only memory (ROM), an electrically erasable programmable read-only memory (EEPROM), a flash memory or another memory technology, a compact disc read-only memory (CD-ROM), a digital video disc (DVD) or another optical disc storage, a magnetic cassette, a magnetic tape, disk storage or another magnetic storage apparatus, or any other medium used for storing desired information and accessible by a computer. Moreover, as known to those of ordinary skill in the art, the communication media generally include computer-readable instructions, data structures, program modules or other data in carriers or in modulated data signals transported in other transport mechanisms and may include any information delivery medium.

Example embodiments have been disclosed herein. Although specific terms are used, these terms are used only and should only be construed in a generic and illustrative sense and are not intended to be limiting. In some instances, it is apparent to those skilled in the art that, unless otherwise clearly indicated, features, characteristics, and/or elements described in conjunction with particular embodiments may be used alone or may be used in combination with features, characteristics, and/or elements described in conjunction with other embodiments. Accordingly, it is to be understood by those skilled in the art that various changes in form and detail may be made without departing from the scope of the present disclosure as stated in the appended claims.

## Claims

1. A virtualized network function deployment method, comprising:

   acquiring current deployment resource information of a deployment platform and determining a host to be deployed, wherein the deployment resource information comprises memory information and central processing unit information of each host in the deployment platform;
   performing, according to virtual machine information of a virtualized network function and the central processing unit information of the host to be deployed, primary pre-deployment on a virtual machine required by the virtualized network function; and
   performing, according to the memory information of each host in the deployment platform, secondary pre-deployment on a virtual machine occupying overrun memory in a primary pre-deployment result.

2. The method of claim 1, wherein before acquiring the current deployment resource information of the deployment platform, the method further comprises:

   in response to a pre-deployment requirement initiated by a user terminal, generating an instance model corresponding to the virtualized network function according to a virtualized network function package; and
   acquiring the virtual machine information from the instance model.

3. The method of claim 2, wherein acquiring the virtual machine information from the instance model comprises:
   extracting a resource requirement of the virtualized network function from the instance model, and segmenting the resource requirement in units of virtual machines to generate the virtual machine information.

4. The method of claim 1, wherein the deployment resource information further comprises available domain information and specification information of each host in the deployment platform.

5. The method of claim 4, wherein determining the host to be deployed comprises:
   determining the host to be deployed that is in the deployment platform and matches a specification and an available domain required by the virtual machine.

6. The method of claim 1, wherein performing, according to the memory information of each host in the deployment platform, the secondary pre-deployment on the virtual machine occupying the overrun memory in the primary pre-deployment result comprises:

   determining, according to the memory information of each host in the deployment platform, a target virtual machine satisfying a preset location exchange condition in the primary pre-deployment result; and

exchanging a deployment location of the virtual machine occupying the overrun memory with a deployment location of the target virtual machine.

7. The method of claim 6, wherein determining, according to the memory information of each host in the deployment platform, the target virtual machine satisfying the preset location exchange condition in the primary pre-deployment result comprises:

from virtual machines without overrun memory in the primary pre-deployment result, determining, according to the memory information of each host in the deployment platform, a candidate virtual machine corresponding to a host having a memory margin and a number of central processing units that satisfy a requirement of the virtual machine occupying the overrun memory; and
selecting one candidate virtual machine as the target virtual machine.

8. The method of claim 6, further comprising:
in response to determining that the target virtual machine satisfying the preset location exchange condition does not exist in the primary pre-deployment result, determining a target host outside the primary pre-deployment result according to the memory information and the central processing unit information of each host in the deployment platform, and pre-deploying the virtual machine occupying the overrun memory on the target host.

9. The method of claim 1, further comprising:
generating a deployment result of a plurality of virtual machines, and sending the deployment result of the plurality of virtual machines to the deployment platform.

10. The method of claim 9, further comprising:
in response to deployment error information sent by the deployment platform, updating the deployment resource information, and performing, according to the updated deployment resource information, the primary pre-deployment and the secondary pre-deployment again.

11. A management and orchestration platform, comprising:

at least one processor; and
a storage apparatus configured to store at least one program;
wherein the at least one program, when executed by the at least one processor, causes the at least one processor to perform the virtualized network function deployment method of any one of claims 1 to 10.

12. A computer-readable medium storing a computer program which, when executed by a processor, causes the processor to perform the virtualized network function deployment method of any one of claims 1 to 10.

| S1 |
| Acquire current deployment resource information of a deployment platform and determine a host to be deployed |

↓

| S2 |
| According to virtual machine information of a virtualized network function and central processing unit information of the host to be deployed, perform primary pre-deployment on a virtual machine required by the virtualized network function |

↓

| S3 |
| According to memory information of each host in the deployment platform, perform secondary pre-deployment on a virtual machine occupying overrun memory in a primary pre-deployment result |

**FIG. 1**


| S01 |
| In response to a pre-deployment requirement initiated by a user terminal, generate an instance model corresponding to the virtualized network function according to a virtualized network function package |

↓

| S02 |
| Acquire virtual machine information from the instance model |

↓

| S1 |
| Acquire current deployment resource information of a deployment platform and determine a host to be deployed |

↓

| S2 |
| According to the virtual machine information of the virtualized network function and central processing unit information of the host to be deployed, perform primary pre-deployment on a virtual machine required by the virtualized network function |

↓

| S3 |
| According to memory information of each host in the deployment platform, perform secondary pre-deployment on a virtual machine occupying overrun memory in a primary pre-deployment result and generate a deployment result of multiple virtual machines |

**FIG. 2**

EP 4 155 923 A1

S1

Determine the host to be deployed that is in the deployment platform and matches a specification and an available domain required by the virtual machine

S101

**FIG. 3**

S3

Determine a target virtual machine satisfying a preset location exchange condition in the primary pre-deployment result according to the memory information of each host in the deployment platform

S301

Exchange a deployment location of the virtual machine occupying the overrun memory with a deployment location of the target virtual machine

S302

**FIG. 4**

S301

According to the memory information, determine, from virtual machines whose memory is not overrun in the primary pre-deployment result, a candidate virtual machine corresponding to a host having a memory margin and the number of central processing units that satisfy a requirement of the virtual machine occupying the overrun memory

S3011

Select one candidate virtual machine as the target virtual machine

S3012

**FIG. 5**

10

| Acquire current deployment resource information of a deployment platform and determine a host to be deployed | S1 |

| According to virtual machine information of a virtualized network function and central processing unit information of the host to be deployed, perform primary pre-deployment on a virtual machine required by the virtual machine information | S2 |

| According to memory information of each host in the deployment platform, perform secondary pre-deployment on a virtual machine occupying overrun memory in a primary pre-deployment result and generate a deployment result of multiple virtual machines | S3 |

| Generate the deployment result of multiple virtual machines and send the deployment result of multiple virtual machines to the deployment platform | S4 |

**FIG. 6**

## INTERNATIONAL SEARCH REPORT

| | International application No. |
|---|---|
| | **PCT/CN2021/092652** |

**A. CLASSIFICATION OF SUBJECT MATTER**

G06F 9/455(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, CNPAT, WPI, EPODOC, GOOGLE, IEEE: 虚拟化, 虚拟机, 部署, 分配, 配置, 主机, 内存, 处理器, 再次, 二次, virtual machine, CPU, management, memory, schedul+, allocate+, host

**C. DOCUMENTS CONSIDERED TO BE RELEVANT**

| Category* | Citation of document, with indication, where appropriate, of the relevant passages | Relevant to claim No. |
|---|---|---|
| A | CN 104008002 A (UNIVERSITY OF ELECTRONIC SCIENCE AND TECHNOLOGY OF CHINA) 27 August 2014 (2014-08-27) <br> description, paragraphs [0010]-[0045], and figures 1-6 | 1-12 |
| A | CN 104298539 A (NANJING UNIVERSITY) 21 January 2015 (2015-01-21) <br> entire document | 1-12 |
| A | CN 108228348 A (SF TECHNOLOGY CO., LTD.) 29 June 2018 (2018-06-29) <br> entire document | 1-12 |
| A | US 2013275975 A1 (HITACHI, LTD.) 17 October 2013 (2013-10-17) <br> entire document | 1-12 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 June 2021** | **24 June 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/092652**

| Patent document cited in search report | | | Publication date (day/month/year) | Patent family member(s) | | | Publication date (day/month/year) |
|---|---|---|---|---|---|---|---|
| CN | 104008002 | A | 27 August 2014 | None | | | |
| CN | 104298539 | A | 21 January 2015 | None | | | |
| CN | 108228348 | A | 29 June 2018 | None | | | |
| US | 2013275975 | A1 | 17 October 2013 | WO | 2012056731 | A1 | 03 May 2012 |
| | | | | JP | 2014038364 | A | 27 February 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010434160